# EUROPÄISCHE PATENTSCHRIFT

(11) **EP 3 931 041 B1**
(45) Veröffentlichungstag und Bekanntmachung des Hinweises auf die Patenterteilung: **22.02.2023**
(21) Anmeldenummer: 20707597.9
(22) Anmeldetag: 25.02.2020
(51) Int. Cl.: B60N 2/235

(54) **RASTBESCHLAG FÜR EINEN FAHRZEUGSITZ**
DETENT FITTING FOR A VEHICLE SEAT
FERRURE À CRAN D'ARRÊT POUR UN SIÈGE DE VÉHICULE

(30) Priorität: 25.02.2019 DE 102019104712
(43) Veröffentlichungstag der Anmeldung: 05.01.2022
(60) Teilanmeldung: 23150849.0
(73) Patentinhaber: Brose Fahrzeugteile SE & Co. Kommanditgesellschaft, Coburg, 96450 Coburg (DE)
(72) Erfinder: SCHUKALSKI, Jürgen, 96238 Küps (DE); HOFMANN, Jochen, 96257 Marktgraitz (DE); HAUSMANN, Peter, 96450 Coburg (DE)
(74) Vertreter: Maikowski & Ninnemann Patentanwälte Partnerschaft mbB
(86) Internationale Anmeldenummer: PCT/EP2020/054809
(87) Internationale Veröffentlichungsnummer: WO 2020/173893

(56) Entgegenhaltungen:
- EP-A1- 0 250 290
- EP-A1- 2 823 993
- WO-A1-2010/020047
- DE-A1-102010 010 925

## Beschreibung

Die Erfindung betrifft einen Rastbeschlag für einen Fahrzeugsitz nach dem Oberbegriff des Anspruchs 1 sowie einen Fahrzeugsitz.

Ein derartiger Rastbeschlag umfasst ein erstes Beschlagteil und ein zweites Beschlagteil, die um eine Drehachse relativ zueinander drehbar gelagert sind, mehrere, insbesondere vier, relativ zum ersten Beschlagteil bewegbar gelagerte Sperrelemente, die zum Verriegeln des Rastbeschlags in eine Verriegelungsstellung bringbar sind, in der sie im Eingriff mit einer Verzahnung des zweiten Beschlagteils stehen, und ein relativ zum ersten Beschlagteil drehbar gelagertes Nockenelement mit mehreren Nocken zum Abstützen jedes der Sperrelemente in dessen Verriegelungsstellung derart, dass jedes der Sperrelemente in der Verriegelungsstellung an zumindest einem Aufstandspunkt in Berührung mit einem zugeordneten Nocken steht.

Ein solcher Rastbeschlag ist in der EP 2 326 531 B1 beschrieben und umfasst dort vier Sperrelemente, was eine besonders große Belastbarkeit des Rastbeschlags ermöglicht. Allerdings kann der verriegelte Zustand dieses bekannten Rastbeschlags durch eine große Anzahl von Aufstandspunkten am Nockenelement überbestimmt sein und infolge von Herstellungstoleranzen kann zumindest eines der Sperrelemente im verriegelten Zustand ein radiales Spiel aufweisen. Hierdurch kann die Belastbarkeit des Rastbeschlags wieder reduziert sein.

Auch die WO 2010/020047 A1 beschreibt einen Rastbeschlag der eingangs genannten Art. In der EP 0 250 290 A1 und in der DE 10 2010 010 925 A1 sind weitere Rastbeschläge beschrieben.

Aufgabe der vorliegenden Erfindung ist es, eine aufgrund der Anzahl der Aufstandspunkte am Nockenelement erhaltene Überbestimmtheit so gering wie möglich zu halten.

Diese Aufgabe wird durch einen Gegenstand mit den Merkmalen des Anspruchs 1 gelöst.

Danach ist vorgesehen, dass zwei der Aufstandspunkte (insbesondere in Umfangsrichtung um die Drehachse gesehen) näher zueinander angeordnet sind als zu den übrigen Aufstandspunkten und/oder die übrigen Aufstandspunkte untereinander.

Hierdurch kann eine aus dem Einsatz der relativ großen Anzahl von vier Sperrelementen resultierende Überbestimmtheit besonders gering gehalten werden. Dadurch kann bei den vier Sperrelementen eine gut ausgeglichene Kräfteverteilung erzielt werden. Jedes Paar von in Umfangsrichtung benachbarten Aufstandspunkten schließt einen Winkel um die Drehachse ein. Der Winkel der zwei am nächsten zueinander angeordneten Aufstandspunkten ist kleiner ist als die Winkel zwischen den übrigen Paaren. Insgesamt liegen z.B. vier (insbesondere genau vier) Aufstandspunkte vor. Die zwei nah zueinander angeordneten Aufstandspunkte sind näher zueinander angeordnet als alle übrigen Paare von Aufstandspunkten am Nockenelement.

Eine Winkelhalbierende zwischen den beiden am nächsten zueinander angeordneten Aufstandspunkten (in Bezug auf die Drehachse) und die übrigen Aufstandspunkte können (in etwa) in gleichen Abständen um die Drehachse angeordnet sein. Hierdurch kann eine nahezu statisch bestimmte Anlage der vier Sperrelemente am Nockenelement erzielt werden und alle Sperrelemente können vollständig in die Verzahnung des zweiten Beschlagteils gedrückt werden. Hierdurch kann die Lastaufnahme über die Sperrelemente besonders gleichmäßig erfolgen, wodurch ein größeres Buchmoment erzielbar ist.

Die in etwa gleichen Abstände schließen z.B. jeweils 120 Grad (oder etwa 120 Grad) um die Drehachse ein.

In einer Ausgestaltung weist jedes der Sperrelemente einen primären Stützvorsprung und, optional, einen sekundären Stützvorsprung auf. Der primäre Stützvorsprung steht in der Verriegelungsstellung des Sperrelements (unabhängig von einer auf den Rastbeschlag einwirkenden Kraft) an einem Aufstandspunkt in Berührung mit einem zugeordneten Nocken. Der sekundäre Stützvorsprung gerät (erst) bei Überschreiten einer (vorgegebenen) auf die Beschlagteile wirkenden Kraft in Berührung mit einem Nocken. Der primäre und der sekundäre Stützvorsprung eines (insbesondere eines jeden) Sperrelements sind in Umfangsrichtung voneinander beabstandet.

Die sekundären Stützvorsprünge weisen in einer Ausgestaltung identische Winkelabstände auf wie die primären Stützvorsprünge, insbesondere auch in derselben Reihenfolge.

Es können insgesamt vier primäre Stützvorsprünge derart vorgesehen sein, dass zwischen jeweils in Umfangsrichtung benachbarten primären Stützvorsprüngen insgesamt vier Winkel ausgebildet sind, wobei ein Winkel (z.B. 120 Grad) größer als die anderen drei Winkel ist und ein Winkel (z.B. kleiner oder gleich 30 Grad oder 20 Grad, insbesondere zwischen 10 und 20 Grad) kleiner als die anderen drei Winkel ist. Alternativ oder zusätzlich sind insgesamt vier sekundäre Stützvorsprünge derart vorgesehen, dass zwischen jeweils in Umfangsrichtung benachbarten sekundären Stützvorsprüngen insgesamt vier Winkel ausgebildet sind, wobei ein Winkel größer als die anderen drei Winkel ist und ein Winkel kleiner als die anderen drei Winkel ist.

Optional sind die sekundären Stützvorsprünge um 180 Grad versetzt und/oder spiegelbildlich (an einer Spiegelebene gespiegelt) zu den primären Stützvorsprüngen angeordnet sind.

In einer Ausgestaltung ist jedes Sperrelement (in Umfangsrichtung gesehen) zwischen zwei benachbarten Sperrelementen angeordnet, von welchen bei einer Krafteinwirkung das eine Sperrelement gleichsinnig und das andere Sperrelement gegensinnig zum dazwischen angeordneten Sperrelement kippt. Eine derartige Anordnung hat gegenüber einer Anordnung, in welcher jedes Sperrelement gegensinnig zu seinen beiden benachbarten Sperrelementen kippt, den wesentlichen Vorteil, dass die Aufstandspunkte von zwei Sperrelementen derart nah aneinander angeordnet sein können, dass eine besonders sichere Verriegelung möglich ist. Eine Anordnung, in welcher jedes Sperrelement gegensinnig zu seinen beiden jeweils benachbarten Sperrelementen kippt, ist demgegenüber für gewöhnlich substantiell überbestimmt, sodass die Bauteile kippeln können.

In einer Ausgestaltung besitzt jedes Sperrelement z.B. zwei benachbarte Sperrelemente, von welchen das eine Sperrelement gleichsinnig und das andere Sperrelement gegensinnig zu diesem mittleren Sperrelement kippen. Beispielsweise ist vorgesehen, dass zwei Paare von in Umfangsrichtung gesehen jeweils benachbarten Sperrelementen jeweils innerhalb des Paars gleichsinnig und in Bezug auf die Sperrelemente des anderen Paars gegensinnig kippen. Alternativ oder zusätzlich ist vorgesehen, dass gleichsinnig kippende Sperrelemente weiter voneinander entfernt sind als gegensinnig kippende Sperrelemente.

Optional sind die Sperrelemente so ausgebildet und angeordnet, dass sie in Umfangsrichtung gesehen in folgender Reihenfolge kippen: gegen den Uhrzeigersinn, gegen den Uhrzeigersinn, im Uhrzeigersinn, im Uhrzeigersinn.

Ferner wird ein Rastbeschlag für einen Fahrzeugsitz bereitgestellt, der nach einer beliebigen, vorstehend beschriebenen Ausgestaltung ausgebildet ist. Dabei sind zwei der Sperrelemente an einem gemeinsamen Nocken des Nockenelements abstützbar, insbesondere im Verriegelungszustand abgestützt.

Hierdurch ist es möglich, zwei der Sperrelemente besonders nah zueinander anzuordnen, wodurch in der Ebene der Sperrelemente Platz für andere Komponenten des Rastbeschlags frei wird. Hierdurch ist ein besonders belastbarer und gleichzeitig wenig Bauraum benötigender Rastbeschlag möglich. Durch eine Drehung des Nockenelements sind die Sperrelemente aus der Verriegelungsstellung in eine Entriegelungsstellung bewegbar, in der sie nicht im Eingriff mit der Verzahnung des zweiten Beschlagteils stehen (oder, je nach der Drehrichtung des Nockenelements, aus der Entriegelungsstellung in die Verriegelungsstellung bewegbar).

Der gemeinsame Nocken weist z.B. Stützflächen zum Abstützen von Stützvorsprüngen der zwei (benachbarten) Sperrelemente auf. Optional sind die Stützflächen des gemeinsamen Nockens (in Bezug auf die Drehachse) radial versetzt zueinander angeordnet. Eine der Stützflächen ist z.B. weiter außen angeordnet als die andere. Hierdurch ist es möglich, die zur Entriegelung nötige Drehbewegung besonders klein zu halten.

Das Nockenelement kann Aufnahmebereiche aufweisen. Die Aufnahmebereiche sind z.B. so ausgebildet, dass darin die Stützvorsprünge der Sperrelemente eingreifen können, wenn die Sperrelemente in einer Entriegelungsstellung (außer Eingriff mit der Verzahnung des zweiten Beschlagteils) angeordnet sind. Jeder Aufnahmebereich wird z.B. durch zwei gegenüberliegende Seitenflanken definiert. Die Nocken des Nockenelements sind gemäß einer Weiterbildung durch jeweils zwei in Umfangsrichtung um die Drehachse benachbarte Aufnahmebereiche begrenzt. In Umfangsrichtung gesehen wechseln sich Aufnahmen und Nocken ab. Beispielsweise sind die Aufnahmebereiche gegenüber benachbarten Stützflächen des Nockenelements radial zur Drehachse hin zurückgesetzt.

Es kann vorgesehen sein, dass zwischen Stützflächen zum Abstützen von Stützvorsprüngen von zwei (benachbarten) Sperrelementen kein Aufnahmebereich ausgebildet ist. Hierbei handelt es sich z.B. um die Stützflächen des gemeinsamen Nockens. Die beiden entsprechenden Sperrelemente können hierdurch nah aneinander angeordnet sein.

Die Sperrelemente können alle in derselben Ebene angeordnet sein. In einer Ausgestaltung ist zumindest eine Feder vorgesehen, die in derselben Ebene angeordnet ist wie die Sperrelemente. Beispielsweise spannt die Feder das Nockenelement in die verriegelnde Stellung vor. Durch die Anordnung der Feder in der Ebene der Sperrelemente ist unter Beibehaltung eines stabilen Stands der Sperrelemente ein gleichzeitig ein besonders flacher Rastbeschlag mit integrierter Federvorspannung möglich.

Optional sind sämtliche Nocken des Nockenelements verschieden von den übrigen Nocken ausgebildet.

Zumindest einige der Nocken können eine in Bezug auf einen zur Drehachse konzentrischen Kreis geneigte Stützfläche aufweisen, durch die jeweils eines der Sperrelemente in den Eingriff mit der Verzahnung des zweiten Beschlagteils drängbar und/oder reibschlüssig im Eingriff mit der Verzahnung des zweiten Beschlagteils sicherbar ist. Die geneigten Stützflächen bewirken eine radiale Bewegung der Sperrelemente (in Bezug auf die Drehachse) und können auch als Steuerflächen bezeichnet werden.

Zumindest einige der Nocken können eine in Bezug auf die Drehachse konzentrische Stützfläche aufweisen, mit der jeweils ein in der Verriegelungsstellung befindliches Sperrelement im Eingriff mit der Verzahnung des zweiten Beschlagteils sicherbar ist. Diese Stützflächen können auch als Sicherungsflächen bezeichnet werden.

Optional weist das Nockenelement zwei gemeinsame Nocken für jeweils zwei Sperrelemente auf, wobei einer der gemeinsamen Nocken zwei konzentrische Stützflächen umfasst und der andere der gemeinsamen Nocken zwei geneigte Stützflächen umfasst. Alternativ dazu kann jeder der gemeinsamen Nocken zwei geneigte Stützflächen aufweisen oder jeder der gemeinsamen Nocken kann zwei konzentrische Stützflächen aufweisen, oder zumindest ein gemeinsamer Nocken oder beide gemeinsame Nocken weisen jeweils eine geneigte Stützfläche (für ein Sperrelement) und eine konzentrische Stützfläche (für ein anderes Sperrelement) auf.

In einer Ausgestaltung ist zwischen zumindest einer konzentrischen Stützfläche und dem zugeordneten und im Verriegelungszustand befindlichen Sperrelement (im Eingriff mit der Verzahnung des zweiten Beschlagteils) ein Spalt ausgebildet. Dabei kann vorgesehen sein, dass bei Überschreiten einer auf die Beschlagteile wirkenden (vorbestimmten) Kraft der Spalt geschlossen wird, sodass sich das Sperrelement an der zugeordneten konzentrischen Stützfläche abstützen kann. Im Normalgebrauch des Rastbeschlags liegt der Spalt somit vor, sodass nur wenige Berührungspunkte zwischen dem Nockenelement und den Sperrelementen vorliegen. Das Nockenelement kann somit leichtgängig sein und Überbestimmungen können vermieden werden. In einem Überlastfall, z.B. infolge eines Fahrzeug-Crashs wird die vorbestimmte Kraft überschritten und die Sperrelemente stützen sich an zusätzlichen Stützflächen ab und können so besonders sicher in der Verriegelungsstellung gehalten werden.

Optional ist an der Verzahnung des zweiten Beschlagteils zumindest eine Zahnplombe vorgesehen. Die Zahnplombe verschließt z.B. den Zwischenraum zwischen zwei oder mehr benachbarten Zähnen der Verzahnung. Optional steht die Zahnplombe nach innen gegenüber den angrenzenden Zähnen vor. Die Zahnplombe dient einem besseren sowie verschleißärmeren Verriegelungsverhalten beim Einfahren der Sperrelemente aus dem Freischwenk- in den Rastbereich. Dies ermöglicht eine einfachere Ausführung der Übergangskontur vom Freischwenk- in den Rastbereich an einem Freischwenkelement.

Der Rastbeschlag kann ferner eine Freischwenkvorrichtung umfassen, z.B. in Form einer separaten Platte oder in Form eines Materialabschnitts eines der Beschlagteile, z.B. des zweiten Beschlagteils. Die Freischwenkvorrichtung weist einen Freischwenkabschnitt auf, der dazu ausgebildet ist, mit zumindest einem der Sperrelemente im außer Eingriff mit der Verzahnung des zweiten Beschlagteils stehenden Zustand derart zusammenzuwirken, dass eine Bewegung des Sperrelements in die Verriegelungsstellung verhindert wird. Optional erstreckt sich der Freischwenkabschnitt über mehr als 90 Grad um die Drehachse. So kann ein Fahrzeugsitz mit dem Rastbeschlag frei geschwenkt werden, ohne dass der Rastbeschlag stets betätigt werden muss, z.B. in eine Easy-Entry-Stellung und/oder in eine Fold-Flat-Stellung.

Die Sperrelemente können in verschiedenen Abständen zueinander angeordnet sein (z.B. gemessen als Winkel um die Drehachse). Zwischen den größeren Abständen kann Platz für andere Komponenten sein, z.B. eine oder mehrere Federn.

Optional umfasst der Rastbeschlag vier, insbesondere genau vier Sperrelemente, was einen besonders belastbaren Rastbeschlag ermöglicht.

Gemäß einem Aspekt wird ein Fahrzeugsitz bereitgestellt, der ein Sitzteil und eine relativ zum Sitzteil schwenkbare Rückenlehne umfasst. Der Fahrzeugsitz umfasst ferner zumindest einen Rastbeschlag nach einer beliebigen, hierin beschriebenen Ausführung, insbesondere ein miteinander gekoppeltes Paar solcher Rastbeschläge. Der Rastbeschlag verbindet (oder die Rastbeschläge verbinden) die Rückenlehne schwenkbar mit dem Sitzteil. Dieser Fahrzeugsitz kann besonders belastbar ausgebildet sein, sodass sich der Rastbeschlag oder die Rastbeschläge auch bei einer Überlastung, z.B. infolge eines Fahrzeugcrashs, nicht entriegelt/entriegeln. Gleichzeitig ist es möglich, dass der Rastbeschlag oder die Rastbeschläge besonders wenig Bauraum in Anspruch nehmen.

Der der Erfindung zugrundeliegende Gedanke soll nachfolgend anhand der in den Figuren dargestellten Ausführungsbeispiele näher erläutert werden. Es zeigen:
- Fig. 1: eine Querschnittsdarstellung eines Rastbeschlags im verriegelten Zustand mit zwei Beschlagteilen, vier Sperrelementen und einem federelastisch vorgespannten Nockenelement;
- Fig. 2: den Rastbeschlag gemäß Fig. 1 in einem entriegelten Zustand;
- Fig. 3: einen vergrößerten Ausschnitt der Darstellung gemäß Fig. 1;
- Fig. 4A bis 4C: Querschnittsdarstellungen des Rastbeschlags gemäß Fig. 1 bis 3 in verschiedenen Zuständen;
- Fig. 5: eine Seitenansicht des Rastbeschlags gemäß Fig. 1 bis 4C, wobei ein Querschnitt A-A eingezeichnet ist, der der Ansicht gemäß Fig. 1 bis 3 entspricht, und ein Querschnitt B-B, der der Ansicht gemäß Fig. 4A bis 4C entspricht; und
- Fig. 6: einen Fahrzeugsitz mit dem Rastbeschlag gemäß Fig. 1 bis 5.

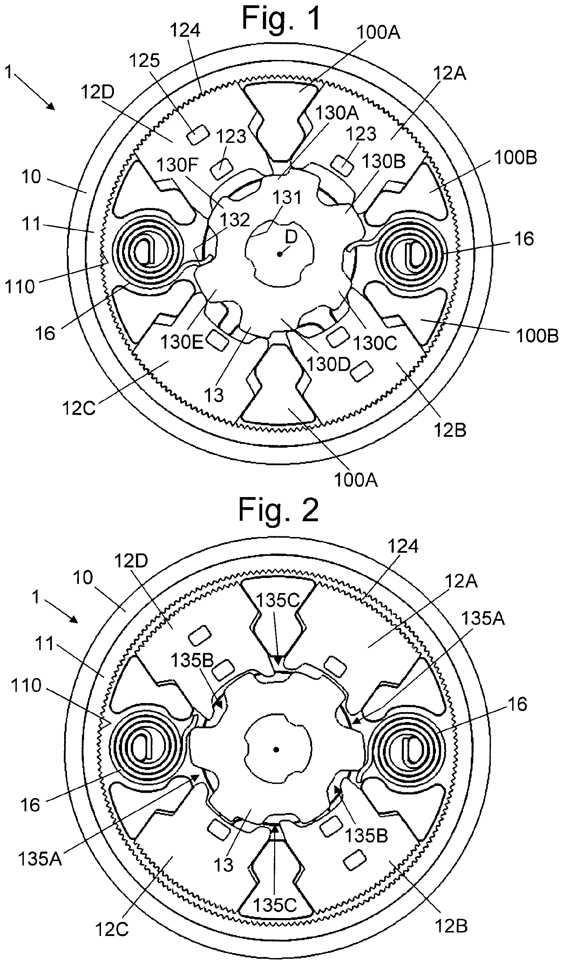

Die Fig. 1 bis 5 zeigen einen Rastbeschlag 1, bei dem ein erstes Beschlagteil 10 und ein zweites Beschlagteil 11 um eine Drehachse D schwenkbar aneinander gelagert sind. Der Rastbeschlag 1 dient zum schwenkbaren Verbinden zweier Fahrzeugteile miteinander, beispielsweise zum Verbinden einer Rückenlehne eines Fahrzeugsitzes mit einem Sitzteil des Fahrzeugsitzes. Der Rastbeschlag 1 hält hierbei in einem verriegelten Zustand die Fahrzeugteile drehfest aneinander und kann zum Verschwenken der Fahrzeugteile relativ zueinander entriegelt werden.

An dem ersten Beschlagteil 10 sind mehrere, vorliegend vier Sperrelemente 12A-12D angeordnet. Die Sperrelemente 12A-12D dienen zum Verriegeln des Rastbeschlags 1. Die Sperrelemente 12A-12D sind in Form von Sperrriegeln ausgebildet und radial zur Drehachse D verschiebbar am ersten Beschlagteil 10 gelagert. Hierzu ist jedes Sperrelement 12A-12D zwischen zwei an dem ersten Beschlagteil 10 ausgebildeten oder montierten, insbesondere von einem Grundkörper des ersten Beschlagteils 10 axial vorspringenden Führungsabschnitten 100A, 100B radial verschiebbar geführt. Jedes der Sperrelemente 12A-12D ist im vorliegenden Beispiel einteilig ausgebildet.

Das zweite Beschlagteil 11 weist eine Verzahnung 110 auf, die vorliegend an einem Ringabschnitt des zweiten Beschlagteils 11 ausgebildet ist. Die Verzahnung 110 des zweiten Beschlagteils 11 ist als Innenverzahnung ausgebildet. Jedes Sperrelement 12A-12D weist eine Verzahnung 124 auf, vorliegend jeweils an einem radial äußeren Umfangsabschnitt. Die Verzahnung 124 jedes der Sperrelemente 12A-12D ist dazu ausgestaltet, mit der Verzahnung 110 des zweiten Beschlagteils 11 in Eingriff zu treten, um die beiden Beschlagteile 10, 11 miteinander zu verriegeln.

Die Stellung, in der die Sperrelemente 12A-12D verriegelnd in Eingriff mit der Verzahnung 110 des zweiten Beschlagteils 11 stehen, kann auch als Verriegelungsstellung der Sperrelemente 12A-12D bezeichnet werden. Ein Drehmoment auf die Beschlagteile 10, 11 mit den Sperrelementen 12A-12D in der Verriegelungsstellung presst die Sperrelemente 12A-12D gegen die Führungsabschnitte 100A, 100B, sodass eine Bewegung der Beschlagteile 10, 11 relativ zueinander blockiert ist.

Die Sperrelemente 12A-12D sind ferner in eine Entriegelungsstellung bringbar, in der die Sperrelemente 12A-12D nicht im Eingriff mit der Verzahnung 110 des zweiten Beschlagteils 11 stehen und somit eine Drehung der beiden Beschlagteile 10, 11 relativ zueinander freigeben. Die Sperrelemente 12A-12D sind am ersten Beschlagteil 10 von der Entriegelungsstellung in die Verriegelungsstellung (und umgekehrt) radial verschiebbar gelagert.

Der Rastbeschlag 1 umfasst ferner ein Nockenelement in Form einer Nockenscheibe 13. Die Nockenscheibe 13 ist zentral zwischen den Sperrelementen 12A-12D angeordnet. Die Nockenscheibe 13 ist in einem Raum zwischen dem ersten Beschlagteil 10 und dem zweiten Beschlagteil 11 angeordnet und dabei um die Drehachse D relativ zum ersten Beschlagteil 10 (und zum zweiten Beschlagteil 11) verschwenkbar. Die Nockenscheibe 13 ist vorliegend einteilig ausgebildet.

Die Nockenscheibe 13 ist relativ zum ersten Beschlagteil 10 zwischen einer die Sperrelemente 12A-12D in deren Verriegelungsstellung haltenden Stellung und einer ein Entriegeln der Sperrelemente 12A-12D erlaubenden Stellung drehbar.

Die Nockenscheibe 13 umfasst mehrere (hier sechs) radial nach außen vorstehende Nocken 130A-130F. Die Nocken 130A-130F der Nockenscheibe 13 umfassen jeweils eine oder mehrere Stützflächen 133, 134.

Die Sperrelemente 12A-12D weisen jeweils zwei Stützvorsprünge 121A-121D auf, die der Nockenscheibe 13 zugewandt sind. Die Stützvorsprünge 121A-121D sind an der der Verzahnung 124 abgewandten Seite des jeweiligen Sperrelementes 12A-12D ausgebildet. Die beiden Stützvorsprünge 121A-121D sind voneinander beabstandet. Befindet sich die Nockenscheibe 13 in ihrer Verriegelungsstellung, dann ist den Stützvorsprüngen 121A-121D der Sperrelemente 12 jeweils ein Nocken 130A-130F der Nockenscheibe 13 zugewandt.

Einige Stützflächen 134 der Nockenscheibe 13 weisen in Bezug auf eine Drehung der Nockenscheibe 13 relativ zum ersten Beschlagteil 10 in Richtung zur Verriegelungsstellung jeweils eine radial ansteigende Kontur auf. Diese Stützflächen können auch als geneigte Stützflächen 134 bezeichnet werden. Beispielsweise sind die geneigten Stützflächen 134 der Nockenscheibe 13 jeweils an zumindest einem Ort mit einem positiven Winkel (z.B. um 2 bis 6 Grad, insbesondere um 4 Grad) gegenüber einer Tangente an die Umfangsrichtung um die Drehachse D an diesem Ort geneigt. Die Kontur der geneigten Stützflächen 134 ist von einer konzentrischen (kreisrunden) Form verschieden. Hierdurch kann die Nockenscheibe 13 die Sperrelemente 12A-12D radial nach außen verschieben. Dabei gleiten den geneigten Stützflächen 134 zugeordnete Stützvorsprünge 121B, 121D der Sperrelemente 12A-12D an den geneigten Stützflächen 134 der Nockenscheibe 13 entlang. Sobald die Verzahnung 124 der Sperrelemente 12A-12D anschlagend in Eingriff mit der Verzahnung 110 des zweiten Beschlagteils 11 gebracht ist, wird zwischen der Nockenscheibe 13 und den Sperrelementen 12A-12D ein Reibschluss aufgebaut. Hierdurch ist ein spielfreier Verriegelungszustand des Rastbeschlags 1 möglich. Zudem kann der Reibschluss den Rastbeschlag 1 gegen ein ungewolltes Entriegeln sichern, wenn eine Last auf den Rastbeschlag 1 einwirkt, die die Sperrelemente 12A-12D gegen die Nockenscheibe 13 presst.

Die geneigten Stützflächen 134 dienen somit zum Bewegen der Sperrelemente 12A-12D aus der Entriegelungsstellung in die Verriegelungsstellung und zum Sichern der Sperrelemente 12A-12D in ihrer jeweiligen Verriegelungsstellung. Die Stützvorsprünge 121B, 121D, die mit einer geneigten Stützfläche 134 zusammenwirken, können auch als primäre Stützvorsprünge 121B, 121D bezeichnet werden.

Weitere Stützflächen 133 der Nockenscheibe 13 weisen eine in Bezug auf die Drehachse D konzentrische Kontur auf. Diese Stützflächen 133 sind dazu ausgebildet, jeweils einen zugeordneten Stützvorsprung 121A, 121C abzustützen, wenn das jeweilige Sperrelement 12A-12D in der Verriegelungsstellung angeordnet ist und eine Kraft darauf einwirkt. Diese Stützflächen 133 können auch als konzentrische Stützflächen 133 bezeichnet werden. Die Stützvorsprünge 121A, 121C, die mit einer konzentrischen Stützfläche 133 zusammenwirken, können auch als sekundäre Stützvorsprünge 121A, 121C bezeichnet werden.

Zwischen den konzentrischen Stützflächen 133 und den zugeordneten Stützvorsprüngen 121A, 121C ist im Normalgebrauch ein Abstand und damit ein Spalt S ausgebildet. Wirkt eine Kraft auf die Beschlagteile 10, 11, die eine bestimmte Kraft überschreitet, dann wird der Spalt S geschlossen (z.B. infolge einer Rotation und/oder Deformation der Sperrelemente 12A-12D) und einer oder mehrere der Stützvorsprünge 121A, 121C stützen sich an den konzentrischen Stützflächen 133 ab. Da die konzentrischen Stützflächen 133 nicht geneigt sind, hat ein Druck darauf kein öffnendes Moment zur Folge. Die konzentrischen Stützflächen 133 verhindern effektiv, dass die Verzahnungen 124, 110 außer Eingriff geraten.

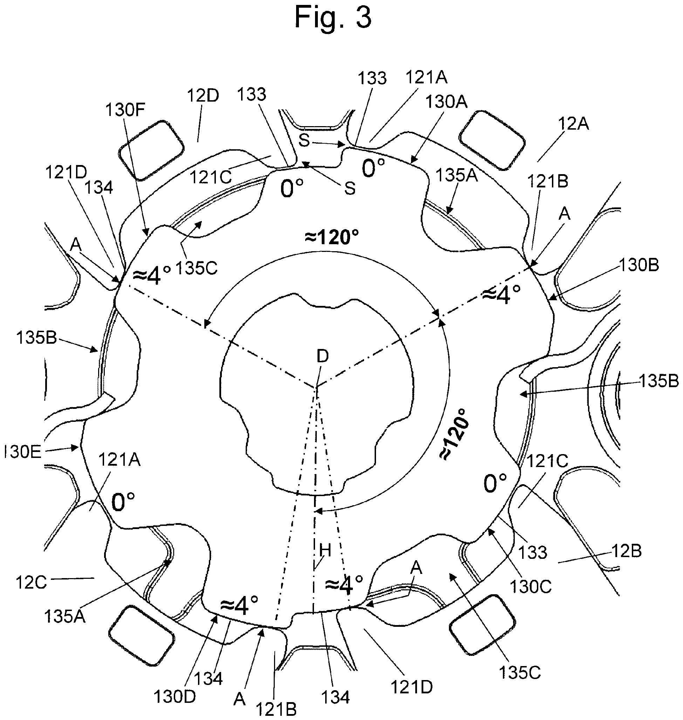

Vorliegend sind die primären Stützvorsprünge 121B, 121D und die sekundären Stützvorsprünge 121A, 121C derart ausgebildet und angeordnet, dass infolge von Krafteinwirkungen (z.B. im Fall eines Fahrzeugcrashs) die Sperrelemente 12A-12D in Bezug auf ihre jeweiligen (durch die Führungsabschnitte 100A, 100B definierten) Verschiebeachsen am ersten Beschlagteil 10 im Uhrzeigersinn oder gegen den Uhrzeigersinn kippen. Dabei weisen die Sperrelemente 12A-12D folgende Kipprichtungen auf (in dieser Reihenfolge, beginnend mit dem in Fig. 3 rechts oben gezeigten Sperrelement 12A): gegen den Uhrzeigersinn, gegen den Uhrzeigersinn, im Uhrzeigersinn, im Uhrzeigersinn. Zwei primäre Stützvorsprünge 121B, 121D sind derart nah beieinander angeordnet, dass trotz des Einsatzes von vier Sperrelementen 12A-12D keine substantielle Überbestimmtheit an der Nockenscheibe 13 vorliegt. Daher kann die Nockenscheibe 13 alle Sperrelemente 12A-12D im Wesentlichen spielfrei verriegeln.

Jeweils zwei der Sperrelemente 12A-12D sind an einem gemeinsamen Nocken 130A, 130D abstützbar. Konkret wirken die einander zugewandten Stützvorsprünge 121A-121D der beiden benachbarten Sperrelemente 12A-12D mit (demselben) gemeinsamen Nocken 130A, 130D zusammen. Die Nockenscheibe 13 umfasst zwei Nocken 130A, 130D, die jeweils ausgebildet und angeordnet sind, mit zwei Sperrelementen 12A-12D zusammenzuwirken. Diese (gemeinsamen) Nocken 130A, 130D sind breiter als die übrigen Nocken 130B, 130C, 130E, 130F.

Die Nockenscheibe 13 weist eine niedrigere Anzahl an (hier sechs) Nocken 130A-130F auf als die Sperrelemente 12A-12D in der Summe Stützvorsprünge 121A-121D (hier acht) umfassen.

Die gemeinsamen Nocken 130A, 130D weisen jeweils mehrere, konkret zwei Stützflächen 133, 134 auf, die jeweils einem anderen der Sperrelemente 12A-12D zugeordnet sind. Bei jedem gemeinsamen Nocken 130A, 130D bilden die beiden Stützflächen 133, 134 Teilabschnitte des gemeinsamen Nockens 130A, 130D.

Ein gemeinsamer Nocken 130A umfasst zwei konzentrische Stützflächen 133. Die beiden konzentrischen Stützflächen 133 erstrecken sich an verschiedenen Radien zur Drehachse D. Der andere gemeinsame Nocken 130D umfasst zwei geneigte Stützflächen 134. Die geneigten Stützflächen 134 weisen jeweils dieselbe Steigung (hier 4 Grad) auf, erstrecken sich aber an zueinander versetzten Radien. Eine der Stützflächen 134 (die in Entriegelungsrichtung voreilende) ist radial weiter außen angeordnet als die andere.

Die jeweils an einem weiteren Nocken 130B, 130C, 130E, 130F ausgebildeten Stützflächen 133, 134 sind jeweils an denselben Radien angeordnet wie die demselben Sperrelement 12A-12D zugeordnete Stützfläche 133, 134 des gemeinsamen Nockens 130A, 130D. In der Folge sind zwei diametral gegenüberliegende Sperrelemente 12A, 12C in radialer Richtung kürzer als die anderen beiden, ebenfalls diametral gegenüberliegenden Sperrelemente 12B, 12D. Hierdurch sind zwei (jeweils mit nur einem Sperrelement 12A, 12C zusammenwirkende) Nocken 130B, 130E vorgesehen, welche radial weiter vorstehen als zwei weitere (jeweils mit nur einem Sperrelement 12B, 12D zusammenwirkende) Nocken 130C, 130F. Jeweils einer der beiden weiter außen liegenden Nocken 130B, 130E und der beiden weiter innen liegenden Nocken 130C, 130F weist eine konzentrische Stützfläche 133 auf und der jeweils andere Nocken 130B, 130C, 130E, 130F eine geneigte Stützfläche 134.

Somit sind sämtliche Nocken 130A-130F des Nockenelements 13 unterschiedlich ausgebildet.

Insbesondere anhand von Fig. 3 ist zu erkennen, dass jedes der Sperrelemente 12A-12D an einem Aufstandspunkt A in Berührung mit der geneigten Stützfläche 134 eines zugeordneten Nockens 130B, 130D, 130F steht, wenn die Sperrelemente 12A-12D in der Verriegelungsstellung angeordnet sind. Es sind bei Normalgebrauch genau vier Aufstandspunkte A ausgebildet.

Zwei der Aufstandspunkte A sind näher zueinander angeordnet als zu den übrigen Aufstandspunkten A und die übrigen Aufstandspunkte A untereinander.

Zumindest zwischen zwei in Umfangsrichtung benachbarten Aufstandspunkten ist (in Bezug auf die Drehachse D) ein Winkel von 120 Grad (oder 120 +/- 5 Grad) ausgebildet.

In Bezug auf die Drehachse D lässt sich eine Winkelhalbierende H zwischen den beiden näher zueinander angeordneten Aufstandspunkten A definieren. Die Winkelhalbierende H und die übrigen beiden Aufstandspunkte A sind in etwa in gleichen Abständen um die Drehachse D angeordnet, also mit Winkeln von (etwa) 120 Grad (in Fig. 3 mit strichpunktierten Linien veranschaulicht).

Hierdurch wird eine nahezu statisch bestimmte Verriegelungsstellung erzielt. Die Nockenscheibe 13 zentriert sich unter Last zwischen den Aufstandspunkten A. Da zwei der Aufstandspunkte A nah beieinander angeordnet sind (z.B. mit einem Abstand von wenigen Grad, beispielsweise unter 20 Grad, unter 10 Grad oder sogar unter 5 Grad) verhält sich der Rastbeschlag 1 diesbezüglich ähnlich einem Rastbeschlag mit nur drei Sperrelementen, im Vergleich dazu durch das vierte Sperrelement aber mit einer größeren Belastbarkeit.

Das Nockenelement 13 weist ferner Aufnahmebereiche 135A-135C auf, in welche die Stützvorsprünge 121A-121D der Sperrelemente 12A-12D eingreifen, wenn die Sperrelemente 12A-12D in der Entriegelungsstellung angeordnet sind, siehe insbesondere Fig. 2. In Umfangsrichtung um die Drehachse D gesehen wechseln sich Aufnahmebereiche 135A-135C und Nocken 130A-130F ab. Jeder Nocken 130A-130F steht gegenüber den zwei angrenzenden Aufnahmebereichen 135A-135C radial nach außen vor.

Angrenzend an jeden gemeinsamen Nocken 130A, 130D ist eine gemeinsame Aufnahme 135C, welche dazu ausgebildet ist, jeweils einen Stützvorsprung 121A-121D der zwei dem gemeinsamen Nocken 130A, 130D zugeordneten Sperrelemente 12A-12D aufzunehmen. Die übrigen Aufnahmebereiche 135A, 135B sind jeweils dazu ausgebildet (genau) einen Stützvorsprung 121A-121D aufzunehmen.

Zwischen den Stützflächen 133, 134 von jedem der gemeinsamen Nocken 130A, 130D ist kein Aufnahmebereich für einen Stützvorsprung 121A-121D vorgesehen. Die Stützflächen 133, 134 von jedem der gemeinsamen Nocken 130A, 130D gehen direkt über eine Flanke ineinander über.

Jeweils zwei einem gemeinsamen Nocken 130A, 130D zugeordnete Sperrelemente 12A-12D sind näher (enger) zueinander angeordnet als zu den übrigen Sperrelementen 12A-12D. Hierdurch ist zwischen zwei Sperrelementen 12A-12D, die jeweils einem anderen der gemeinsamen Nocken 130A, 130D zugeordnet sind, ausreichend Platz verfügbar, um andere Komponenten des Rastbeschlags 1 anzuordnen, vorliegend Federn 16.

Die Nockenscheibe 13 ist mittels mehreren, hier zwei Federn 16 in ihre Verriegelungsstellung vorgespannt. Dies ermöglicht eine komfortable Verriegelung mittels der Federn 16. Die Federn 16 stützen sich am ersten Beschlagteil 10 ab und üben eine Kraft auf Anschläge 132 der Nockenscheibe 13 aus. Die Federn 16 sind auf gegenüberliegenden Seiten der Nockenscheibe 13 angeordnet. Die Federn 16 sind in der Ebene der Sperrelemente 12A-12D angeordnet, was eine besonders flache Bauform ermöglicht. Die Federn 16 sind vorliegend jeweils als Spiralfedern ausgebildet.

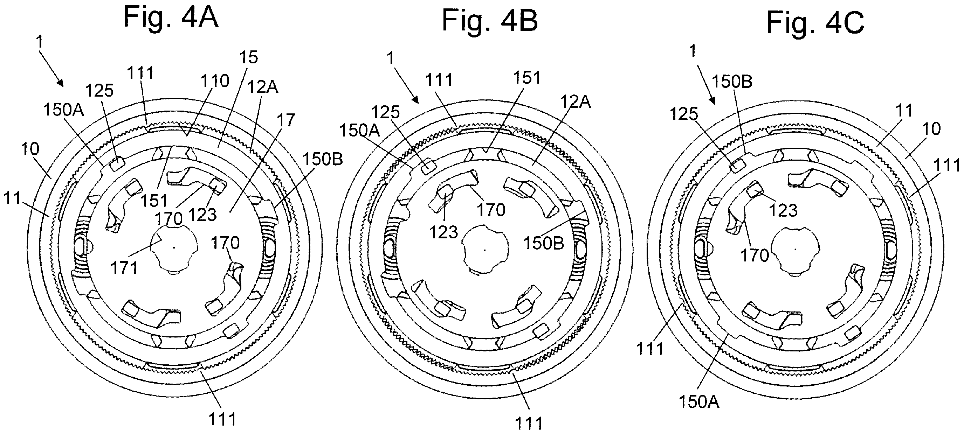

Wie insbesondere anhand der Fig. 4A bis 4C gezeigt, umfasst der Rastbeschlag 1 ferner ein Steuerelement 17 in Form einer Kulissenscheibe und eine Freischwenkvorrichtung 15.

Die Nockenscheibe 13 und das Steuerelement 17 weisen jeweils eine zentrale Aufnahme 131, 171 zur formschlüssigen Verbindung mit einem Betätigungselement (z.B. einer Welle, Buchse, etc.) auf. Wird die Betätigungswelle ausgehend vom verriegelten Zustand gemäß Fig. 1 und 4A in Entriegelungsrichtung relativ zum ersten Beschlagteil 10 rotiert, dann dreht die Betätigungswelle das Steuerelement 17 und die Nockenscheibe 13.

Das Steuerelement 17 umfasst für jedes Sperrelement 12A-12D eine Kulisse 170. In jeder Kulisse 170 ist ein Pin 123 oder ein sonstiger axial vorstehender Bereich des zugeordneten Sperrelements 12A-12D aufgenommen. Die Kulisse 170 weist einen radial innen liegenden Bereich und einen radial außen liegenden Bereich auf, die durch Schrägen miteinander verbunden sind. Eine Drehung des Steuerelements 17 drückt eine Schräge jeder Kulisse 170 gegen die darin aufgenommene Lasche 123 und drängt somit das Sperrelement 12A je nach Drehrichtung in die entriegelte Stellung (gemäß Fig. 2) oder in Eingriff mit der Verzahnung 110 des zweiten Beschlagteils 11 (gemäß Fig. 1). Das Steuerelement 17 ist scheibenförmig ausgebildet. Es ist koaxial zur Nockenscheibe 13 angeordnet. Das Steuerelement 17 und die Nockenscheibe 13 sind entlang der Drehachse D nebeneinander angeordnet. Vorliegend liegen das Steuerelement 17 und die Nockenscheibe 13 aneinander an.

Um den Rastbeschlag 1 wieder zu Verriegeln, genügt es, die Betätigungswelle nicht mehr zu betätigen. Die Federn 16 drängen die Nockenscheibe 13 und das Steuerelement 17 in die jeweilige Ausgangslage gemäß Fig. 1 und 4A. Die Nockenscheibe 13 rotiert relativ zum ersten Beschlagteil 10, sodass die geneigten Stützflächen 134 entlang der Sperrriegel 12A-12D gleiten und diese radial nach außen verschieben und in Eingriff mit der Verzahnung 110 des zweiten Beschlagteils 11 pressen.

Die Betätigungswelle ist mit einem Betätigungsglied zum Betätigen der Betätigungswelle gekoppelt. Das Betätigungsglied ist z.B. als Betätigungshebel oder als (insbesondere elektrischer) Aktuator ausgebildet.

Die Freischwenkvorrichtung 15 ist am zweiten Beschlagteil 11 ausgebildet oder daran drehfest montiert. Im gezeigten Beispiel ist die Freischwenkvorrichtung 15 als Freischwenkscheibe ausgebildet. Die Freischwenkvorrichtung 15 ist ringförmig. An ihrem inneren Umfang weist die Freischwenkvorrichtung 15 mehrere (hier vier) Aufnahmen 150A, 150B auf. Die Aufnahmen 150A, 150B sind durch gegenüber diesen Aufnahmen 150A, 150B radial nach innen vorstehende Freischwenkabschnitte 151 verbunden. Die Freischwenkabschnitte 151 sind kreisbogenförmig. Jeweils zwei Aufnahmen 150A, 150B sind an gegenüberliegenden Bereichen der Freischwenkvorrichtung 15 ausgebildet.

An zwei der Sperrelemente 12B, 12D ist ein Pin 125 oder ein sonstiger axial vorstehender Bereich angebracht oder ausgebildet, der in eine der Aufnahmen 150A, 150B eingreift, wenn sich der Rastbeschlag 1 im verriegelten Zustand befindet. Wird die Nockenscheibe 13 in eine entriegelte Stellung gedreht (Fig. 4B zeigt eine Zwischenstellung auf dem Weg dorthin), können die Sperrelemente 12B, 12D radial nach innen verschoben werden. Durch eine dann folgende Drehung der Beschlagteile 10, 11 zueinander werden die Pins 125 der Sperrelemente 12B, 12D in die Freischwenkabschnitte 151 der Freischwenkvorrichtung 15 verlagert. Die Freischwenkabschnitte 151 hindern durch eine Anlage der Pins 125 ein Verschieben der Sperrelemente 12B, 12D mit den Pins 125 in die verriegelte Stellung. Durch eine Kopplung mittels des Steuerelements 17 wird auch ein Verschieben der übrigen Sperrelemente 12A, 12C in die verriegelte Stellung verhindert. Einige Sperrelemente, nämlich die Sperrelemente 12B, 12D dienen somit als Master-Sperrelemente, die übrigen als Slave-Sperrelemente. Das Master/Slave-Prinzip mit gegenüberliegenden Master-Sperrelementen 12B, 12D (Abstand 180°) ermöglicht einen Freischwenkbereich von über 90 Grad.

Die Pins 125 können entlang der Freischwenkabschnitte 151 verschoben werden, insbesondere gleiten.

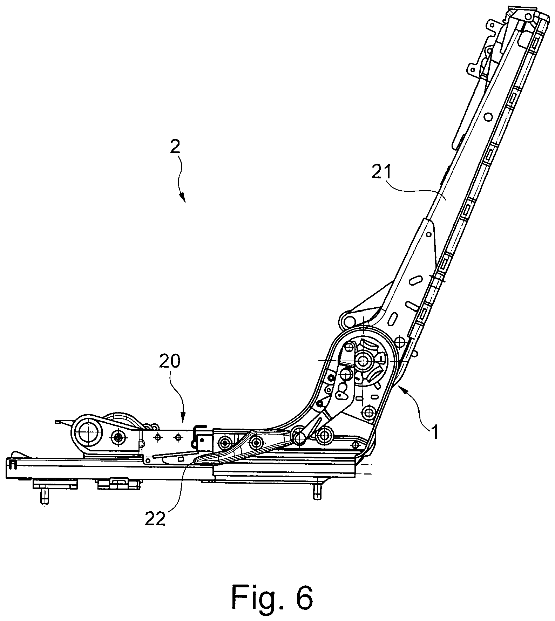

Somit definiert die Freischwenkvorrichtung 15 einen Winkelbereich der relativen Lage der beiden Beschlagteile 10, 11 zueinander, in denen der Rastbeschlag 1 nicht verriegelbar ist, insbesondere auch dann, wenn ein Betätigungsglied nicht mehr betätigt wird. Hierdurch kann eine Rückenlehne eines mit dem Rastbeschlag 1 ausgestatteten Fahrzeugsitzes in einfacher Weise in eine Cargoposition in Richtung auf ein Sitzteil des Fahrzeugsitzes vorgeklappt und wieder zurückgeklappt werden (siehe auch Fig. 6).

In Umfangsrichtung um die Drehachse D gesehen sind die Aufnahmen 150A größer (haben eine größere Breite) als die Pins 125. Dadurch definieren die Aufnahmen 150A einen Winkelbereich der relativen Lage der beiden Beschlagteile 10, 11 zueinander, in denen der Rastbeschlag 1 verriegelbar ist. In diesem Winkelbereich, auch als Komfortbereich bezeichnet, wird somit eine individuelle Einstellung und Verriegelung der Neigung der Rückenlehne gegenüber dem Sitzteil ermöglicht. Die jeweils zweite Aufnahme 150B pro Pin 125 erlaubt das Verriegeln des Rastbeschlags 1 in der Cargoposition.

Fig. 4A bis 4C zeigen ferner optionale Zahnplomben 111, von denen vorliegend zwei diagonal gegenüberliegend vorgesehen sind. Die Zahnplomben 111 sind an der Verzahnung 110 des zweiten Beschlagteils 11 ausgebildet und ermöglichen ein besonders sicheres Verrasten. Die Zahnplomben 111 füllen den Bereich zwischen benachbarten Zähnen der Verzahnung 110 auf. Jede Zahnplombe 111 unterbricht die Verzahnung 110 des zweiten Beschlagteils 11 abschnittsweise. Es können eine oder mehrere Zahnplomben (hier zwei, insbesondere genau zwei) vorgesehen sein. Die paarweise Anordnung der Sperrelemente 12A-12D ermöglicht den Einsatz der mindestens einen Zahnplombe 111 zum Einfahren in die vorderste Komfortraste aus dem Freischwenkbereich.

Die Aufnahmen 150A, 150B und Freischwenkabschnitte 151 der Freischwenkvorrichtung 15 definieren gemeinsam eine Steuerkontur. Die Zahnplomben 111 sind jeweils im Bereich einer Grenze zwischen einem Freischwenkabschnitt 151 und einer Aufnahme 150A, 150B angeordnet und dienen jeweils dazu, in einem Verschleißfall, infolgedessen die Steuerkontur der Freischwenkvorrichtung 15 im Bereich der Grenze zerstört ist, zu gewährleisten, dass das entsprechende Sperrelement 12A-12D nur außerhalb des Freischwenkbereichs 151 (also nur nach Eintreten in die Aufnahme 150A, 150B) in Eingriff mit der Verzahnung 110 des zweiten Beschlagteils 11 gelangen kann. Dies ist zum einen vorteilhaft, um in einem Verschleißfall innerhalb des Freischwenkabschnitts 151 eine Verriegelung zu vermeiden. Zum anderen kann auf diese Weise sichergestellt werden, dass es in einem Verschleißfall nicht innerhalb des Freischwenkabschnitts 151 zu einer teilweisen, unvollständigen Verriegelung durch einen nur teilweisen Eingriff des mindestens einen Sperrelements 12A-12D in die Verzahnung 110 des zweiten Beschlagteils 11 kommen kann.

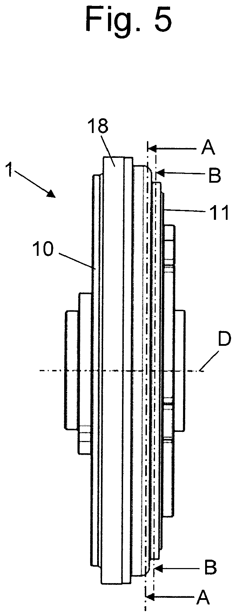

Fig. 5 zeigt den Rastbeschlag 1 in einer Seitenansicht. Darin ist insbesondere ein Umklammerungsring 18 zu erkennen, mit dem die beiden Beschlagteile 10, 11 zueinander drehbar aneinander gehalten sind. Der Umklammerungsring 18 ist mit einem der beiden Beschlagteile 10, 11 fest verbunden, z.B. verschweißt, und umgreift das andere der beiden Beschlagteile 10, 11 formschlüssig.

Der Fahrzeugsitz 2 gemäß Fig. 6 umfasst ein Sitzteil 20, eine Rückenlehne 21 und einen oder mehrere Rastbeschläge 1 gemäß Fig. 1 bis 5. Dabei ist eines der beiden Beschlagteile 10, 11 (z.B. das erste Beschlagteil 10) fest mit dem Sitzteil 20 verbunden und das andere der beiden Beschlagteile 10, 11 ist fest mit der Rückenlehne 21 verbunden. Mittels des Rastbeschlags 1 (oder der Rastbeschläge 1) ist die Neigung der Rückenlehne 21 relativ zum Sitzteil 20 einstellbar und in verschiedenen möglichen Neigungsstellungen verriegelbar.

Bei dem Fahrzeugsitz 2 handelt es sich z.B. um eine Rücksitzbank oder einen Teil einer Rücksitzbank eines Fahrzeugs, beispielsweise um den größeren Teil einer 60-40-geteilten Rücksitzbank. Der Fahrzeugsitz 2 kann einen oder mehrere, z.B. zwei oder drei Sitzplätze bereitstellen.

Der Rastbeschlag 1 ist in den verriegelten Zustand vorgespannt. Solange ein mit der Betätigungswelle drehfest verbundener Betätigungshebel nicht betätigt wird, befindet sich der Rastbeschlag 1 somit im verriegelten Zustand.

Der Betätigungshebel des Rastbeschlags 1 ist (über eine Schwenkhebelanordnung) mit einem Griff 22 wirkverbunden, sodass eine Betätigung des Griffs 22 den Rastbeschlag 1 entriegelt, um eine Neigungseinstellung der Rückenlehne 21 bezüglich des Sitzteils 20 zu erlauben.

### Bezugszeichenliste

- 1: Rastbeschlag
- 10: erstes Beschlagteil
- 100A, 100B: Führungsabschnitt
- 11: zweites Beschlagteil
- 110: Verzahnung
- 111: Zahnplombe
- 12A-12D: Sperrelement
- 121A-121D: Stützvorsprung
- 123: Pin
- 124: Verzahnung
- 125: Pin
- 13: Nockenscheibe (Nockenelement)
- 130A-130F: Nocken
- 131: Aufnahme
- 132: Anschlag
- 133: konzentrische Stützfläche
- 134: geneigte Stützfläche
- 135A-135C: Aufnahmebereich
- 15: Freischwenkvorrichtung
- 150A, 150B: Aufnahme
- 151: Freischwenkabschnitt
- 16: Feder
- 17: Steuerelement
- 170: Kulisse
- 171: Aufnahme
- 18: Umklammerungsring
- 2: Fahrzeugsitz
- 20: Sitzteil
- 21: Rückenlehne
- 22: Griff
- A: Aufstandspunkt
- D: Drehachse
- H: Winkelhalbierende
- S: Spalt

## Patentansprüche

1. Rastbeschlag (1) für einen Fahrzeugsitz (2), umfassend:
- ein erstes Beschlagteil (10) und ein zweites Beschlagteil (11), die um eine Drehachse (D) relativ zueinander drehbar sind,
- vier relativ zum ersten Beschlagteil (10) bewegbar gelagerte Sperrelemente (12A-12D), die in eine Verriegelungsstellung in Eingriff mit einer Verzahnung (110) des zweiten Beschlagteils (11) bringbar sind, und
- ein relativ zum ersten Beschlagteil (10) drehbar gelagertes Nockenelement (13) mit mehreren Nocken (130A-130F) zum Abstützen der Sperrelemente (12A-12D) in der Verriegelungsstellung derart, dass jedes der Sperrelemente (12A-12D) an einem Aufstandspunkt (A) in Berührung mit einem zugeordneten Nocken (130B, 130D, 130F) steht,
**dadurch gekennzeichnet, dass**
zwei der Aufstandspunkte (A) näher zueinander angeordnet sind als zu den übrigen Aufstandspunkten (A) und die übrigen Aufstandspunkte (A) untereinander.

2. Rastbeschlag (1) nach Anspruch 1, **dadurch gekennzeichnet, dass** eine Winkelhalbierende (H) der beiden näher zueinander angeordneten Aufstandspunkte (A) in Bezug auf die Drehachse (D) und die übrigen Aufstandspunkte (A) in etwa in gleichen Abständen um die Drehachse (D) angeordnet sind.

3. Rastbeschlag (1) nach Anspruch 2, **dadurch gekennzeichnet, dass** die in etwa gleichen Abstände jeweils 120 Grad um die Drehachse (D) einschließen.

4. Rastbeschlag (1) nach einem der vorhergehenden Ansprüche, **dadurch gekennzeichnet, dass** jedes der Sperrelemente (12A-12D) einen primären Stützvorsprung (121B, 121D) aufweist, der in der Verriegelungsstellung an einem Aufstandspunkt (A) in Berührung mit einem zugeordneten Nocken (130B, 130D, 130F) steht, und einen sekundären Stützvorsprung (121A, 121C), der bei Überschreiten einer auf die Beschlagteile (10, 11) wirkenden Kraft in Berührung mit einem Nocken (130A, 130C, 130E) gerät.

5. Rastbeschlag (1) nach Anspruch 4, **dadurch gekennzeichnet, dass** die sekundären Stützvorsprünge (121A, 121C) untereinander dieselben Winkelabstände aufweisen wie die primären Stützvorsprünge (121B, 121D).

6. Rastbeschlag (1) nach Anspruch 4 oder 5, **dadurch gekennzeichnet, dass** insgesamt vier primäre Stützvorsprünge (121B, 121D) derart vorgesehen sind, dass zwischen jeweils in Umfangsrichtung benachbarten primären Stützvorsprüngen (121B, 121D) insgesamt vier Winkel ausgebildet sind, wobei ein Winkel größer als die anderen drei Winkel ist und ein Winkel kleiner als die anderen drei Winkel ist, und insgesamt vier sekundäre Stützvorsprünge (121A, 121C) derart vorgesehen sind, dass zwischen jeweils in Umfangsrichtung benachbarten sekundären Stützvorsprüngen (121A, 121C) insgesamt vier Winkel ausgebildet sind, wobei ein Winkel größer als die anderen drei Winkel ist und ein Winkel kleiner als die anderen drei Winkel ist.

7. Rastbeschlag (1) nach einem der Ansprüche 4 bis 6, **dadurch gekennzeichnet, dass** die sekundären Stützvorsprünge (121A, 121C) um 180 Grad versetzt zu den primären Stützvorsprüngen (121B, 121D) angeordnet sind.

8. Rastbeschlag (1) nach einem der vorhergehenden Ansprüche, **dadurch gekennzeichnet, dass** jedes Sperrelement (12A-12D) in Umfangsrichtung gesehen zwischen zwei benachbarten Sperrelementen (12A-12D) angeordnet ist, von welchen bei einer Krafteinwirkung das eine Sperrelement (12A-12D) gleichsinnig und das andere Sperrelement (12A-12D) gegensinnig zum dazwischen angeordneten Sperrelement kippt.

9. Rastbeschlag (1) nach Anspruch 8, **dadurch gekennzeichnet, dass** die Sperrelemente (12A-12D) in Umfangsrichtung gesehen in folgender Reihenfolge kippen: gegen den Uhrzeigersinn, gegen den Uhrzeigersinn, im Uhrzeigersinn, im Uhrzeigersinn.

10. Rastbeschlag (1) nach einem der vorhergehenden Ansprüche, **dadurch gekennzeichnet, dass** an der Verzahnung (110) des zweiten Beschlagteils (11) zumindest eine Zahnplombe (111) vorgesehen ist.

11. Rastbeschlag (1) nach einem der vorhergehenden Ansprüche, **gekennzeichnet durch** eine Freischwenkvorrichtung (15) mit einem Freischwenkabschnitt (151), der dazu ausgebildet ist, mit zumindest einem der Sperrelemente (12B, 12D) im außer Eingriff mit der Verzahnung (110) des zweiten Beschlagteils (11) stehenden Zustand zusammenzuwirken, um eine Bewegung des Sperrelements (12B, 12D) in die Verriegelungsstellung zu verhindern, wobei sich der Freischwenkabschnitt (151) über mehr als 90 Grad um die Drehachse (D) erstreckt.

12. Rastbeschlag (1) nach einem der vorhergehenden Ansprüche, **dadurch gekennzeichnet, dass** die Sperrelemente (12A-12D) in verschiedenen Abständen zueinander angeordnet sind.

13. Rastbeschlag (1) nach einem der vorhergehenden Ansprüche, **gekennzeichnet durch** genau vier Sperrelemente (12A-12D).

14. Fahrzeugsitz (2) mit einem Sitzteil (20) und einer relativ zum Sitzteil (20) schwenkbaren Rückenlehne (21), **gekennzeichnet durch** zumindest einen Rastbeschlag (1) nach einem der vorhergehenden Ansprüche.

## Claims

1. A detent fitting (1) for a vehicle seat (2), comprising:
- a first fitting part (10) and a second fitting part (11), which are rotatable relative to each other about an axis of rotation (D),
- four locking elements (12A-12D) movably mounted relative to the first fitting part (10), which can be brought into a locking position in engagement with a toothing (110) of the second fitting part (11), and
- a cam element (13) rotatably mounted relative to the first fitting part (10), comprising a plurality of cams (130A-130F) for supporting the locking elements (12A-12D) in the locking position in such a way that each of the locking elements (12A-12D) is in contact with an associated cam (130B, 130D, 130F) at a support point (A),
**characterized in that**
two of the support points (A) are arranged closer to each other than to the remaining support points (A) and the remaining support points (A) among each other.

2. The detent fitting (1) according to claim 1, **characterized in that** a bisector (H) of the two support points (A) arranged closer to each other with respect to the axis of rotation (D) and the remaining support points (A) are arranged at approximately equal distances around the axis of rotation (D).

3. The detent fitting (1) according to claim 2, **characterized in that** the approximately equal distances each enclose 120 degrees around the axis of rotation (D).

4. The detent fitting (1) according to any of the preceding claims, **characterized in that** each of the locking elements (12A-12D) has a primary support protrusion (121B, 121D) which in the locking position is in contact with an associated cam (130B, 130D, 130F) at a support point (A), and a secondary support protrusion (121A, 121C) which on exceedance of a force acting on the fitting parts (10, 11) gets in contact with a cam (130A, 130C, 130E).

5. The detent fitting (1) according to claim 4, **characterized in that** the secondary support protrusions (121A, 121C) have the same angular distances among each other as the primary support protrusions (121B, 121D).

6. The detent fitting (1) according to claim 4 or 5, **characterized in that** a total of four primary support protrusions (121B, 121D) are provided so that between primary support protrusions (121B,121D) each adjacent in the circumferential direction a total of four angles are formed, wherein one angle is greater than the other three angles and one angle is smaller than the other three angles, and a total of four secondary support protrusions (121A, 121C) are provided so that between secondary support protrusions (121A, 121C) each adjacent in the circumferential direction a total of four angles are formed, wherein one angle is greater than the other three angles and one angle is smaller than the other three angles.

7. The detent fitting (1) according to any of claims 4 to 6, **characterized in that** the secondary support protrusions (121A, 121C) are arranged offset by 180 degrees from the primary support protrusions (121B, 121D).

8. The detent fitting (1) according to any of the preceding claims, **characterized in that** as seen in the circumferential direction each locking element (12A-12D) is arranged between two adjacent locking elements (12A-12D), of which on application of a force the one locking element (12A-12D) tilts in the same direction and the other locking element (12A-12D) tilts in a direction opposite to the locking element arranged in between.

9. The detent fitting (1) according to claim 8, **characterized in that** as seen in the circumferential direction the locking elements (12A-12D) tilt in the following order: in anti-clockwise direction, in anti-clockwise direction, in clockwise direction, in clockwise direction.

10. The detent fitting (1) according to any of the preceding claims, **characterized in that** on the toothing (110) the second fitting part (11) at least one tooth filling (111) is provided.

11. The detent fitting (1) according to any of the preceding claims, **characterized by** a free-pivoting device (15) comprising a free-pivoting portion (151), which is configured to cooperate with at least one of the locking elements (12B, 12D) in the state out of engagement with the toothing (110) of the second fitting part (11) in order to prevent a movement of the locking element (12B, 12D) into the locking position, wherein the free-pivoting portion (151) extends over more than 90 degrees around the axis of rotation (D).

12. The detent fitting (1) according to any of the preceding claims, **characterized in that** the locking elements (12A-12D) are arranged at different distances to each other.

13. The detent fitting (1) according to any of the preceding claims, **characterized by** exactly four locking elements (12A-12D).

14. A vehicle seat (2) comprising a seat part (20) and a backrest (21) pivotable relative to the seat part (20), **characterized by** at least one detent fitting (1) according to any of the preceding claims.

## Revendications

1. Ferrure à cran d'arrêt (1) pour un siège de véhicule (2), comprenant :
- une première partie de ferrure (10) et une deuxième partie de ferrure (11), qui peuvent tourner l'une par rapport à l'autre autour d'un axe de rotation (D),
- quatre éléments de verrouillage (12A-12D) montés de manière à pouvoir se déplacer par rapport à la première partie de ferrure (10), qui dans une position de verrouillage peuvent être amenés en prise avec une denture (110) de la deuxième partie de ferrure (11), et
- un élément à cames (13) monté de manière à pouvoir tourner par rapport à la première partie de ferrure (10) avec plusieurs cames (130A-130F) pour soutenir les éléments de verrouillage (12A-12D) dans la position de verrouillage, de telle sorte que chacun des éléments de verrouillage (12A-12D) sur un point d'appui (A) est en contact avec une came (130B, 130D, 130F) associée,
**caractérisée en ce que**
deux des points d'appui (A) sont disposés plus près l'un de l'autre que des autres points d'appui (A) et les autres points d'appui (A) entre eux.

2. Ferrure à cran d'arrêt (1) selon la revendication 1, **caractérisée en ce qu'**une bissectrice (H) des deux points d'appui (A) disposés plus près l'un de l'autre par rapport à l'axe de rotation (D) et les autres points d'appui (A) sont disposés sensiblement à intervalles égaux autour de l'axe de rotation (D).

3. Ferrure à cran d'arrêt (1) selon la revendication 2, **caractérisée en ce que** les intervalles à peu près égaux forment un angle de respectivement 120 degrés autour de l'axe de rotation (D).

4. Ferrure à cran d'arrêt (1) selon l'une quelconque des revendications précédentes, **caractérisée en ce que** chacun des éléments de verrouillage (12A-12D) présente une partie saillante de support primaire (121B, 121D), qui dans la position de verrouillage sur un point d'appui (A) est en contact avec une came (130B, 130D, 130F) associée, et une partie saillante de support secondaire (121A, 121C), qui lors du dépassement d'une force agissant sur les parties de ferrure (10, 11) entre en contact avec une came (130A, 130C, 130E).

5. Ferrure à cran d'arrêt (1) selon la revendication 4, **caractérisée en ce que** les parties saillantes de support secondaires (121A, 121C) présentent entre elles les mêmes écarts angulaires que les parties saillantes de support primaires (121B, 121D).

6. Ferrure à cran d'arrêt (1) selon la revendication 4 ou 5, **caractérisée en ce qu'**au total quatre parties saillantes de support primaires (121B, 121D) sont prévues de telle sorte qu'au total quatre angles sont réalisés entre des parties saillantes de support primaires (121B, 121D) respectivement voisines dans la direction périphérique, dans laquelle un angle est plus grand que les trois autres angles et un angle est plus petit que les trois autres angles, et au total quatre parties saillantes de support secondaires (121A, 121C) sont prévues de telle sorte qu'au total quatre angles sont réalisés entre des parties saillantes de support secondaires (121A, 121C) respectivement voisines dans la direction périphérique, dans laquelle un angle est plus grand que les trois autres angles et un angle est plus petit que les trois autres angles.

7. Ferrure à cran d'arrêt (1) selon l'une quelconque des revendications 4 à 6, **caractérisée en ce que** les parties saillantes de support secondaires (121A, 121C) sont disposées de manière décalée de 180 degrés par rapport aux parties saillantes de support primaires (121B, 121D).

8. Ferrure à cran d'arrêt (1) selon l'une quelconque des revendications précédentes, **caractérisée en ce que** chaque élément de verrouillage (12A-12D) vu dans la direction périphérique est disposé entre deux éléments de verrouillage (12A-12D) voisins, parmi lesquels lorsqu'une force est exercée l'un des éléments de verrouillage (12A-12D) bascule dans le même sens et l'autre élément de verrouillage (12A-12D) bascule en sens inverse de l'élément de verrouillage disposé entre ceux-ci.

9. Ferrure à cran d'arrêt (1) selon la revendication 8, **caractérisée en ce que** les éléments de verrouillage (12A-12D) vus dans la direction périphérique basculent dans l'ordre suivant : dans le sens antihoraire, dans le sens antihoraire, dans le sens horaire, dans le sens horaire.

10. Ferrure à cran d'arrêt (1) selon l'une quelconque des revendications précédentes, **caractérisée en ce qu'**au moins un emplâtre dentaire (111) est prévu sur la denture (110) de la deuxième partie de ferrure (11).

11. Ferrure à cran d'arrêt (1) selon l'une quelconque des revendications précédentes, **caractérisée par** un dispositif de pivotement libre (15) avec une partie de pivotement libre (151), qui est réalisée pour coopérer avec au moins un des éléments de verrouillage (12B, 12D) hors de prise avec la denture (110) de la deuxième partie de ferrure (11), afin d'empêcher un mouvement de l'élément de verrouillage (12B, 12D) dans la position de verrouillage, dans laquelle la partie de pivotement libre (151) s'étend sur plus de 90 degrés autour de l'axe de rotation (D).

12. Ferrure à cran d'arrêt (1) selon l'une quelconque des revendications précédentes, **caractérisée en ce que** les éléments de verrouillage (12A-12D) sont disposés à intervalles différents les uns par rapport aux autres.

13. Ferrure à cran d'arrêt (1) selon l'une quelconque des revendications précédentes, **caractérisée par** exactement quatre éléments de verrouillage (12A-12D).

14. Siège de véhicule (2) avec une assise (20) et un dossier (21) pouvant pivoter par rapport à l'assise (20), **caractérisé par** au moins une ferrure à cran d'arrêt (1) selon l'une quelconque des revendications précédentes.
